# EUROPÄISCHE PATENTANMELDUNG

(11) **EP 1 088 793 A1**
(43) Veröffentlichungstag der Anmeldung: **04.04.2001**
(21) Anmeldenummer: 00120700.0
(22) Anmeldetag: 22.09.2000
(51) Int. Cl.: C02F 3/10

(54) **Vorrichtung zur Behandlung von Fluiden und Verfahren zur Herstellung derselben**

(30) Priorität: 01.10.1999 DE 19947517
(71) Anmelder: NORDDEUTSCHE SEEKABELWERKE GMBH & CO. KG, 26954 Nordenham (DE)
(72) Erfinder: Bittner, Hans-Jürgen, Dipl.-Ing., 26954 Nordenham (DE)
(74) Vertreter: Möller, Friedrich, Dipl.-Ing.

(57) **Zusammenfassung**

Getauchte Festbetten (11) für Vorrichtungen zur biologischen Behandlung von Fluiden werden üblicherweise aus festen Blöcken aus Netzrohren gebildet. Die Herstellung dieser Blöcke ist verhältnismäßig aufwendig und ihr Transport wegen des großen Volumens teuer.

Die Erfindung bezieht sich auf ein Festbett (11), das aus Streifen (17) einer fortlaufenden Folienbahn aus Kunststoff gebildet ist. Die Streifen (17) hängen an einer Trageinrichtung (12) herunter und sind vorzugsweise endlos ausgebildet. Durch ein Strecken der Streifen (17) verhält sich das Festbett (11) wie ein solches aus festen Blöcken aus Netzrohren.

Das von der Trageinrichtung (12) herunterhängende Streifen (17) aufweisende Festbett ist besonders geeignet als vollständig im zu behandelnden Fluid eingetauchtes Festbett (11).

## Beschreibung

Die Erfindung betrifft eine Vorrichtung zur Behandlung von Fluiden, insbesondere zur biologischen Behandlung von Flüssig-keiten, gemäß dem Oberbegriff des Anspruchs 1. Die Erfindung betrifft weiterhin ein Verfahren zur Herstellung eines Füllmaterials zur vorzugsweise biologischen Behandlung von Fluiden gemäß dem Oberbegriff des Anspruchs 12.

Eine Vorrichtung der genannten Art wird vorzugsweise zur biologischen Behandlung von Fluiden, das heißt Flüssigkeiten oder Gasen, eingesetzt. Die Vorrichtung verfügt über mindestens ein Festbett, das im Falle der Behandlung von Flüssigkeiten in einem Behälter angeordnet ist. Dabei ist das Festbett in der sich im Behälter befindlichen Flüssigkeit eingetaucht. Das überwiegend aus Kunststoff gebildete Festbett dient zur Bildung von Besiedlungsflächen für Mikroorganismen, die einen sogenannten biologischen Rasen zur entsprechenden Behandlung der Flüssigkeit oder dergleichen bilden.

Bekannte Festbetten sind aus Netzrohren gebildet, die zu starren Festbettkörpern zusammengefaßt sind. Die Festbettkörper lagern auf einem im Behälter angeordneten Traggerüst. Ein solches aus Festbettkörpern gebildetes Festbett ist in der Herstellung sehr aufwendig und mithin teuer. Darüber hinaus verursachen die recht voluminösen Festbettkörper hohe Transportkosten.

Hiervon ausgehend liegt der Erfindung die Aufgabe zugrunde, eine Vorrichtung zur vorzugsweise biologischen Behandlung von Fluiden mit einem einfach aufgebauten Festbett und ein Verfahren zur kostengünstigen Herstellung insbesondere eines Festbetts einer solchen Vorrichtung zu schaffen.

Eine Vorrichtung zur Lösung dieser Aufgabe weist die Merkmale des Anspruchs 1 auf. Demnach ist das Festbett aus Streifen und/oder Strängen gebildet, die von einer Trageinrichtung herunterhängen. Bei den Streifen oder Strängen kann es sich um einfache Gebilde handeln, aus denen sich das Festbett mit geringem Aufwand bilden läßt. Darüber hinaus können die flexiblen Streifen und/oder Stränge im beispielsweise aufgerollten Zustand einfach transportiert werden, indem hieraus erst vor Ort, nämlich im Becken für die zu behandelnde Flüssigkeit, das jeweilige Festbett gebildet wird.

Gemäß einer bevorzugten Ausgestaltung der Vorrichtung sind die Streifen und/oder Stränge gestreckt im Becken oder einem sonstigen Behälter der Vorrichtung angeordnet. Vorzugsweise sind die Streifen und/oder Stränge zumindest so weit gestreckt, daß sie in der Flüssigkeit nicht aufschwimmen können. Dadurch wird gewährleistet, daß die an sich biegeelastischen Streifen und/oder Stränge im Becken mit der Flüssigkeit sich verhalten wie starre Füllkörperblöcke, nämlich vorbestimmte Position einnehmen und diese auch beibehalten zur Bildung definierter, durchgehender Strömungskanäle für die zu behandelnde Flüssigkeit oder ein Gas zwischen benachbarten Strängen und/oder Streifen.

Die Streckung der Stränge und/oder Streifen kann dadurch erfolgen, daß an freien Enden der Streifen oder Stränge, das heißt an der Unterseite des dadurch gebildeten Festbetts, Gegenstände vorgesehen werden, die schwerer sind als die zu behandelnde Flüssigkeit, so daß sie die Streifen und/oder Stränge in vertikaler Richtung auf Zug belasten. Es kann jedem der frei von der Trageinrichtung herunterhängenden Streifen und/oder Stränge ein separater Gegenstand aus vorzugsweise einem Metall, insbesondere nichtrostenden Stahl, zur Streckung derselben zugeordnet sein. Es ist aber auch denkbar, alle oder nur Gruppen von Gegenständen zur Streckung der Stränge und/oder Streifen miteinander zu einer Halteeinrichtung zu verbinden. Dadurch werden die unteren Enden der Stränge und/oder Streifen in einer definierten Relativanordnung zueinander gehalten, und zwar ähnlich wie die oberen Bereiche der Stränge und/oder Streifen, die auf der Trageinrichtung aufgehängt sind.

Gemäß einer bevorzugten Weiterbildung der Vorrichtung sind untere Endbereiche der Stränge und/oder Streifen endlos ausgebildet. Das geschieht vorzugsweise derart, daß zwischen benachbarten Tragorganen der Trageinrichtung senkrecht herunterhängende (gestreckte) Längsabschnitte des jeweiligen Streifens über einen Verbindungsabschnitt einstückig zusammenhängen, wodurch der jeweilige Streifen zwischen zwei benachbarten Tragorganen einen etwa U-artigen oder eventuell auch V-artigen Verlauf aufweist, wobei die Länge der parallelen Längsabschnitte jedes U-artigen Bereichs des betreffenden Strangs und/oder Streifens um ein Vielfaches größer ist als der Abstand zwischen zwei Längsbereichen eines U-artigen Abschnitts des jeweiligen Streifens und/oder Strangs.

Die mit U-artigem (oder V-artigem) Verlauf von der Trageinrichtung herunterhängenden Streifen und/oder Stränge sind besonders einfach zu strecken, indem in den taschenförmigen Verbindungsabschnitt zwischen zwei senkrecht herunterhängenden Längsabschnitten beschwerende Gegenstände eingelegt oder eingehängt werden. Besonders vorteilhaft ist es, plattenförmige Gegenstände in dem jeweiligen taschenförmigen Verbindungsabschnitt, vorzugsweise in jeden Verbindungsabschnitt, anzuordnen, weil durch ihre Schrägstellung der Abstand der länglichen Vertikalabschnitte einfach verändert werden kann und dadurch die Abmessungen, vor allem Breiten, der Strömungskanäle im Festbett einfach und bedarfsgerecht veränderbar sind. Durch die Anordnung länglicher Stangen in den taschenförmigen Verbindungsbereichen, die sich über mehrere nebeneinanderliegende Streifen und Stränge erstrecken, werden die von der Trageinrichtung herunterhängenden Enden der Stränge bzw. der Streifen in einfacher Weise relativ zueinander fixiert. Erfolgt darüber hinaus auch eine Verbindung benachbarter Stangen zu einer rahmen- bzw. gitterförmigen Halteeinrichtung, sind dadurch sowohl nebeneinanderliegende Streifen und Stränge als auch aufeinanderfolgende U-artige Einbuchtungen der jeweiligen Streifen und/oder Stränge in ihrer Relativposition zueinander fixierbar.

Bei aus Streifen gebildeten Strängen ist gemäß einer bevorzugten Ausgestaltung der Erfindung vorgesehen, diese Streifen unmittelbar nebeneinanderliegend, vorzugsweise mit einem minimal möglichen Abstand, anzuordnen. Dadurch läßt sich ein Festbett mit größtmöglicher Bewuchsfläche bilden. Außerdem entstehen durch die völlig oder nahezu lückenlose Aufeinanderfolge der Streifen nahezu plattenförmige Bewuchsflächen, die eine besonders wirksame und leistungsfähige biologische Behandlung des Fluids gewährleisten.

Die Streifen zur Bildung des Festbetts sind im einfachsten Falle aus schmalen Bahnen einer Kunststoffolie gebildet. Die Bahnen können über geschlossene und glatte Oberflächen verfügen.

Es ist aber auch denkbar, Bahnen mit mindestens teilweise profilierter, gewellter oder aufgekräuselter Oberfläche zur Bildung des Festbetts zu verwenden. Ebenso können die Bahnen durch Öffnungen, Einschnitte oder Perforationen gebildete unterbrochene Oberflächen aufweisen. Schließlich ist es auch denkbar, das Festbett aus netzartigen Bahnen zu bilden.

Um die aus Kunststoffolie gebildeten Streifen zugfester zu machen, können sie mit mindestens einem zugaufnehmenden Strang, der vorzugsweise in Längsrichtung der jeweiligen Bahn verläuft, versehen sein. Ein solcher Strang kann aus einem anderen Material gebildet sein, beispielsweise aus einem hochzugfesten Kunststoff, Glasfasern und/oder Kohlefasern.

Ein zur Lösung der eingangs genannten Aufgabe dienendes Verfahren zur Herstellung eines Füllmaterials, insbesondere eines getauchten Festbetts zur biologischen Behandlung von Fluiden, weist die Maßnahmen des Anspruchs 12 auf. Demnach wird das Festbett oder auch ein anderes Füllmaterial zur biologischen Behandlung von Fluiden aus Streifen gebildet, wobei jeder Streifen von einer endlosen Bahn gebildet wird und diese Bahn in vorzugsweise U-artig verlaufenden Buchten ausgeformt wird. Diese Art der Herstellung des Festbetts kann vor Ort erfolgen, indem die zur Herstellung der Streifen dienende Bahn einfach von einer entsprechenden Vorratsrolle abgezogen wird und dabei einen Verlauf erhält, der der Gestalt des jeweiligen Streifens zur Bildung des Festbetts entspricht. Das erfindungsgemäße Verfahren erfordert deshalb überhaupt keine Bearbeitung der im einfachsten Falle von einer Rolle abgezogenen Folienbahn. Es reicht aus, wenn die Folienbahn beim Abziehen von der Rolle einen Verlauf erhält, der dem Verlauf des jeweiligen Streifens des Festbetts entspricht. Die U-artig verlaufenden Buchten der Streifen und/oder Stränge lassen sich einfach bilden. Außerdem ist durch die Aufeinanderfolge U-förmiger Buchten eine verhältnismäßig enge Packung der Folienstreifen erzielbar.

Bevorzugte Ausführungsbeispiele der erfindungsgemäßen Vorrichtung und eines Verfahrens zur Herstellung insbesondere einer solchen Vorrichtung werden nachfolgend anhand der Zeichnung näher erläutert. In dieser zeigen:
- Fig. 1: einen Querschnitt durch die Vorrichtung mit einem teilweise fertiggestellten Festbett,
- Fig. 2: einen um 90° versetzten Querschnitt durch die Vorrichtung mit ebenfalls nur teilweise fertiggestelltem Festbett,
- Fig. 3: eine vergrößerte Einzelheit III eines Teils des Füllkörpers in der Darstellung der Fig. 1,
- Fig. 4: ein alternatives Ausführungsbeispiel eines Füllkörpers in einer Ansicht analog zur Fig. 3,
- Fig. 5: ein weiteres Ausführungsbeispiel eines Füllkörpers in einer Ansicht analog zur Fig. 3,
- Fig. 6: eine schematische Darstellung der Herstellung des Festbetts, und
- Fig. 7: eine Darstellung eines alternativen Verfahrens zur Herstellung des Festbetts.

Die hier gezeigte Vorrichtung dient zur biologischen Behandlung von Flüssigkeiten, und zwar insbesondere zur biologischen Abwasserbehandlung.

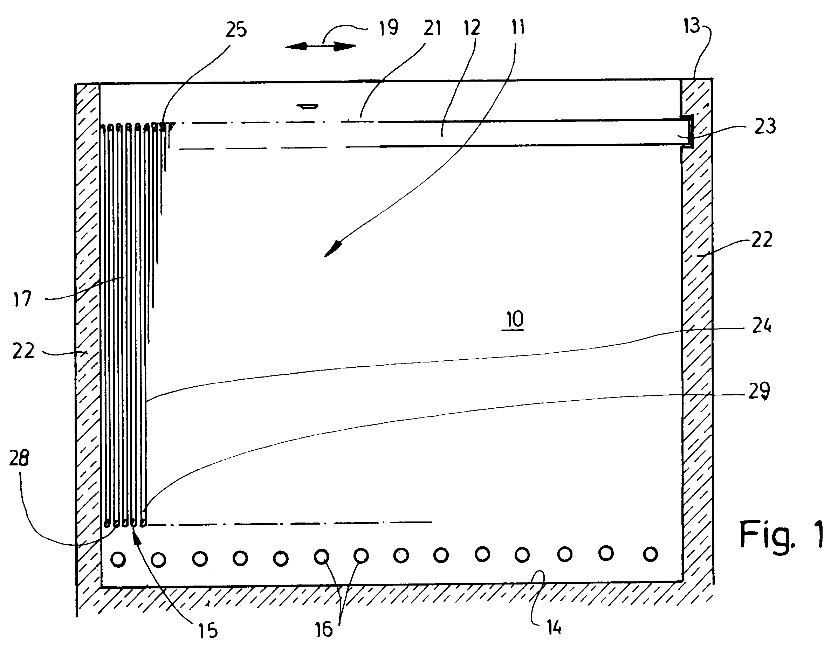

Die Vorrichtung verfügt über ein Becken 10 (Fig. 1) mit einer rechteckförmigen Grundfläche. Die Vorrichtung kann aber auch für Becken mit beliebig andersgestaleten Grundflächen, beispielsweise einer runden Grundfläche, verwendet werden. Im Becken 10 ist ein Festbett 11 angeordnet. Im gezeigten Ausführungsbeispiel befindet sich ein einziges Festbett 11 im Becken 10. Es ist aber auch denkbar, mehrere Festbetten 11 im gleichen Becken 10 anzuordnen.

Das Festbett 11 hängt an einer Trageinrichtung 12 im Becken 10. Die Trageinrichtung 12 ist gerüstartig ausgebildet und erstreckt sich in einer horizontalen Ebene geringfügig unter einem oberen Rand 13 des Beckens 10. Das Festbett 11 endet mit geringfügigem Abstand über einem unteren, horizontalen Boden 14 des Beckens 10. Im dadurch geschaffenen Zwischenraum zwischen einer Unterseite 15 des Festbetts 11 und dem Boden 14 des Beckens 10 ist eine schematisch dargestellte Belüftungseinrichtung 16 aus mit Luft, insbesondere Druckluft, gespeisten Rohren mit oberen Luftaustrittsdüsen angeordnet. Im Becken 10 befindet sich neben dem Festbett 11 die zu behandelnde Flüssigkeit, insbesondere Abwasser. Der Füllstand des Abwassers im Becken 10 ist so gewählt, daß das Festbett 11 vollständig im zu behandelnden Abwasser eingetaucht ist.

Erfindungsgemäß ist das in den Figuren gezeigte Festbett 11 gebildet aus von der Trageinrichtung 12 senkrecht herunterhängenden Streifen 17, die ausschließlich oder größtenteils aus einer Kunststoffolie gebildet sind. Das besondere an der Erfindung besteht darin, daß es hiermit möglich ist, erstmals ein in die zu behandelnde Flüssigkeit mindestens größtenteils, vorzugsweise vollständig eingetauchtes Festbett 11 aus flexiblen Streifen 17 zu bilden.

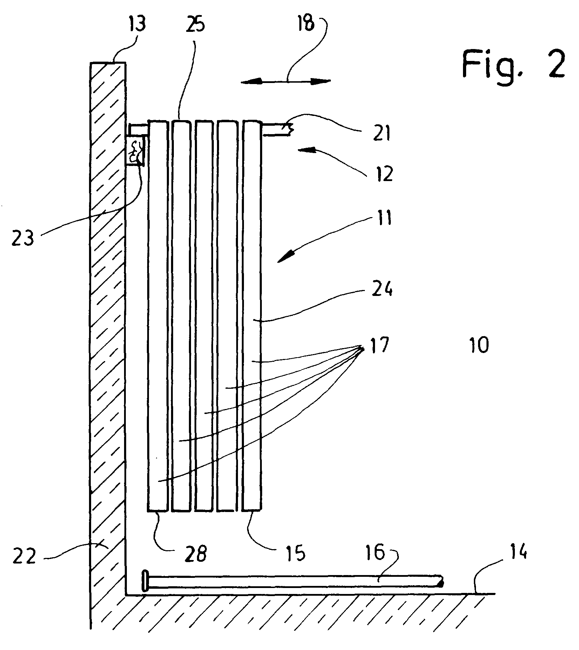

Das Festbett 11 verfügt über mehrere Streifen 17, die dicht an dicht nebeneinanderliegend auf der Trageinrichtung 12 hängen (Fig. 2). In der Fig. 2 sind nur aus Darstellungsgründen schmale Zwischenräume zwischen benachbarten Streifen 17 vorhanden. Vorzugsweise sind solche Zwischenräume so gering wie möglich. Im Idealfalle liegen die Streifen 17 mit benachbarten Rändern unmittelbar aneinander an, wobei sie sich berühren, aber nicht überlappen. In der Praxis wird sich eine solche Nebeneinanderanordnung der Streifen 17 schwer realisieren lassen, so daß die Streifen 17 vorzugsweise so nebeneinander angeordnet sind, daß sie zwar so dicht wie möglich zusammenliegen, sich nach Möglichkeit aber nicht überlappen. Denkbar ist es, daß zwischen benachbarten Streifen sowohl möglichst schmale Zwischenräume vorhanden sind als auch geringfügige randseitige Überlappungen bestehen.

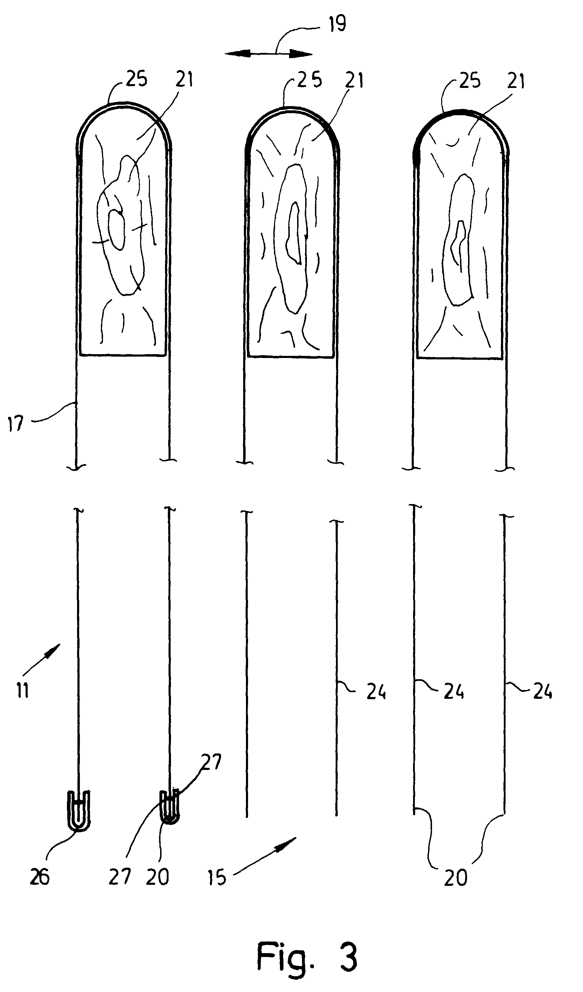

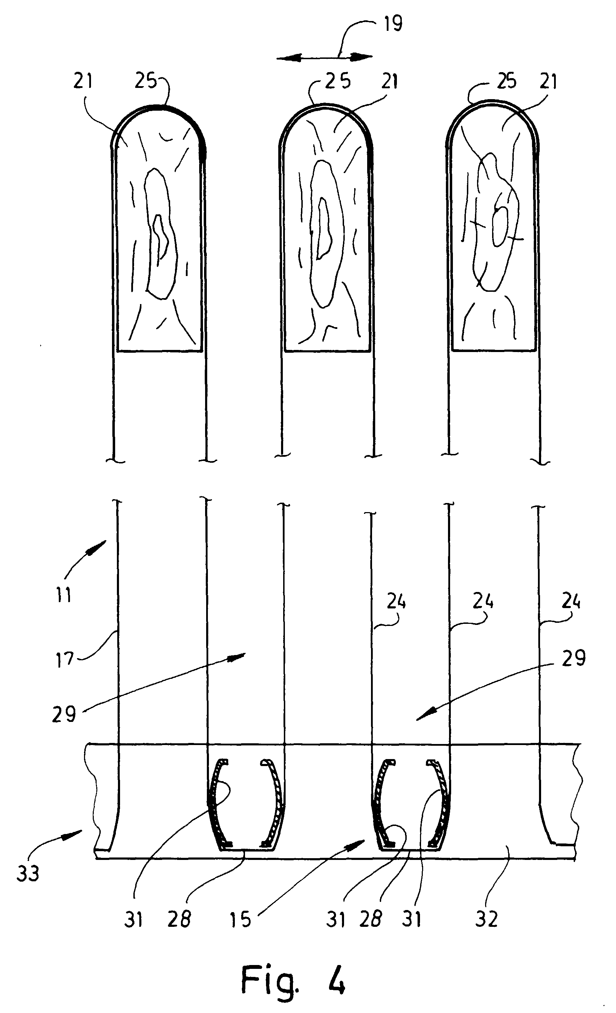

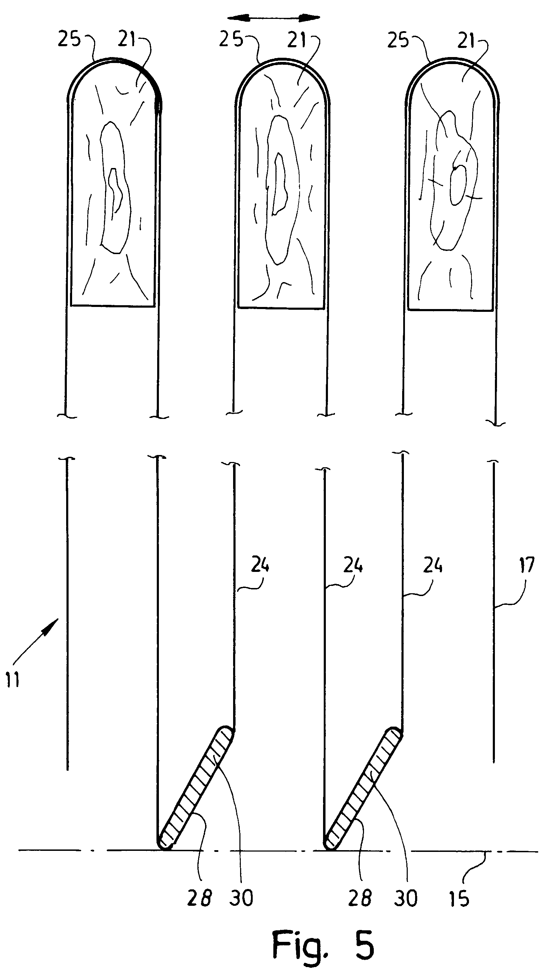

Während die Streifen 17 in Querrichtung 18 (Fig. 2) dicht nebeneinanderliegend angeordnet sind, verläuft jeder Streifen 17 in Längsrichtung 19 (Fig. 1) ununterbrochen als durchgehende Bahn von einer Wandung 22 des Beckens 10 zur gegenüberliegenden Wandung 22 (Ausführungsbeispiele der Fig. 4 und 5). Es ist aber auch denkbar, in Längsrichtung auch mehrere einzelne Streifen 17 aufeinanderfolgend anzuordnen, deren untenliegenden freien Enden 20 in einer etwa horizontalen Ebene über der Belüftungseinrichtung 16 enden und dadurch die Unterseite 15 des Festbetts 11 bilden (Ausführungsbeispiel der Fig. 3).

Den in den Fig. 3 bis 5 gezeigten Ausführungsbeispielen des Festbetts 11 ist gemeinsam, daß die Streifen 17 U-förmig über mit Abstand parallel nebeneinanderliegende Tragbalken 21 der Trageinrichtung 12 gehängt sind. Die Tragbalken 21 weisen etwa gleiche Abstände auf, die etwa so groß sind wie die Breite der Tragbalken 21 selbst. Alle gleich ausgebildeten Tragbalken 21 erstrecken sich in Querrichtung 18 (quer) durch das Becken 10. An gegenüberliegenden Enden stützen sich die Tragbalken 21 auf neben jeder Wandung 22 angeordnete Auflagerbalken 23 ab. Vorzugsweise sind die gegenüberliegenden Enden der Tragbalken 21 mit den Auflagerbalken 23 verbunden, so daß die Auflagerbalken 23 und die Tragbalken 21 zusammen die Trageinrichtung 12 bilden, die durch die Nebeneinanderanordnung der Tragbalken 21 rostartig ausgebildet ist.

Von gegenüberliegenden Seiten jedes Tragbalkens 21 hängen die Streifen 17 zur Bildung des Festbetts 11 herab, und zwar über die gesamte Höhe des Festbetts 11. Die senkrecht von der Trageinrichtung 12 herunterhängenden Abschnitte der Streifen 17 werden im folgenden als Längsabschnitte 24 bezeichnet. Der die beiden von gegenüberliegenden Seiten des jeweiligen Tragbalkens 21 herunterhängenden Längsabschnitte 24 verbindende Bereich jedes Streifens 17, der sich über den oberen Rand des jeweiligen Tragbalkens 21 erstreckt, wird im folgenden als oberer Verbindungsabschnitt 25 bezeichnet. Dieser kann zur Befestigung der Streifen 17 am jeweiligen Tragbalken 21 durch Nageln, Schrauben oder dergleichen dienen.

Beim Ausführungsbeispiel der Fig. 3 wird das Festbett 11 aus verhältnismäßig kurzen Streifen 17 gebildet. Die Streifen 17 nebeneinanderliegender Tragbalken 21 sind nämlich nicht miteinander verbunden. Dadurch weisen die senkrecht von den Tragbalken 11 herunterhängenden Längsabschnitte 24 der Streifen 17 freie Enden 20 auf, wobei die freien Enden 20 aller Streifen 17 des Festbetts 11 etwa in einer gemeinsamen horizontalen Ebene liegen, die die Unterseite 15 des Festbetts 11 bildet.

Die Streifen 17 des Festbetts 11 sind erfindungsgemäß gestreckt bzw. vorgespannt. Diese Streckung erfolgt zumindest in einem solchen Maße, daß die in der zu behandelnden Flüssigkeit eintauchenden Streifen 17, und zwar insbesondere ihre Längsabschnitte 24, nicht aufschwimmen können. Das Strecken der Streifen 17 erfolgt im Bereich der Unterseite 15 des Festbetts 11 durch entsprechend schwere Gegenstände.

Im Ausführungsbeispiel der Fig. 3 sind die freien Enden 20 der von der Trageinrichtung 12 herunterhängenden Längsabschnitte 24 der Streifen 17 mit einzelnen Gewichten versehen. Im gezeigten Ausführungsbeispiel handelt es sich bei diesen Gewichten um Klammern 26 aus einem verhältnismäßig schweren Material wie zum Beispiel Stahl, und zwar insbesondere rostfreiem Stahl. Die Klammern 26 können im einfachsten Falle aus U-förmig umgebogenen Blechstreifen mit mindestens einem innenliegenden Zahn 27 gebildet sein. Durch Zusammendrücken der U-förmigen Klammern 26 greift mindestens der eine Zahn 27 der jeweiligen Klammer 26 in einen am freien Ende 20 angrenzenden Bereich des Streifens 17 ein, wodurch eine zuverlässige Verbindung des jeweiligen Streifens 17 mit der Klammer 26 zustande kommt. Es ist denkbar, jedem einzelnen freien Ende 20 eines Streifens 17 mindestens eine Klammer 26 zuzuordnen. Vorteilhafterweise sind die Klammern 26 aber so ausgebildet, daß sie sich ununterbrochen längs durch das Becken 10 erstrecken, wodurch eine Klammer 26 die Enden 20 aller in Querrichtung 18 des Beckens 10 nebeneinanderliegend angeordneter Streifen 17 gleichzeitig hält. Dadurch werden die in Längsrichtung aufeinanderfolgenden Streifen 17 im Bereich ihrer freien Enden 20 so zusammengehalten, daß sie im wesentlichen spaltfrei aufeinanderfolgen und somit die Längsabschnitte 24 derjenigen Streifen 17, die in einer gleichen in Querrichtung 18 durch das Becken 10 verlaufenden Ebene liegen, eine quasi geschlossene Wand bilden. Denkbar ist es auch, benachbarte Klammern 26, und zwar vorzugsweise solche, die in Querrichtung 18 des Beckens 10 durchgehend verlaufen, in Längsrichtung 19 des Beckens 10 durch in der Fig. 3 nicht gezeigte Abstandshalter zu verbinden. Dann sind die freien Enden 20 der Streifen 17 in horizontaler Richtung vollständig fixiert, und zwar sowohl in Längsrichtung 19 als auch in Querrichtung 18 des Beckens 10.

Das Festbett 11 der Fig. 4 und 5 ist gebildet aus in Querrichtung 18 nebeneinanderliegenden Streifen 17, die sich jeweils durchgehend über die gesamte Längsrichtung 19 des Beckens 10 erstrecken. Dazu sind benachbarte Längsabschnitte 24, die von zueinandergerichteten Seiten aufeinanderfolgender Tragbalken 21 herunterhängen, an ihrer Unterseite durch einen Verbindungsabschnitt 28 miteinander verbunden. Jeder Streifen 17 verfügt dadurch zwischen jeweils zwei aufeinanderfolgenden Tragbalken 21 über eine Bucht 29 mit einem etwa U-förmigen Verlauf. Am unteren Ende ist jede Bucht 29 durch den unteren Verbindungsabschnitt 28 geschlossen, so daß die Streifen 17 der Ausführungsbeispiele der Fig. 4 und 5 keine freien Enden 20 aufweisen. Das Festbett 11 der Ausführungsbeispiele der Fig. 4 und 5 verfügt nur über eine verhältnismäßig kleine Anzahl von Streifen 17, setzt sich nämlich nur aus so vielen in Längsrichtung 19 durchgehend über das Festbett 11 verlaufenden Streifen 17 zusammen, wie in Querrichtung 18 unmittelbar aufeinanderfolgend nebeneinanderliegen (Fig. 2).

Beim Ausführungsbeispiel der Fig. 5 werden die unteren Endbereiche aller Buchten 29 der Streifen 17 beschwert und gestreckt durch eine Platte 30. Die Platte 30 kann im unteren Verbindungsabschnitt 28 jeder einzelnen Bucht 29 jedes Streifens 17 angeordnet sein. Es ist aber auch denkbar, die Platte 30 so lang auszubilden, daß sie in Querrichtung 18 des Festbetts 11 durchgehend verläuft und sich demzufolge durch hintereinanderliegende Buchten 29 sämtlicher Streifen 17 erstreckt. Dabei werden von der jeweiligen Platte 30 die Buchten 29 aufeinanderfolgender Streifen 17 in Querrichtung 18 auf Abstand gehalten. Denkbar ist es auch, gegenüberliegende Enden aller Platten 30 durch quer dazu, also in Längsrichtung 19 des Festbetts 11 verlaufende (nicht gezeigte) Randträger zu verbinden. Die Platten 30 sind dann zu einem stabilen Gitter zusammengefaßt, wodurch sich ihr Abstand nicht ändern kann und dadurch auch in Längsrichtung 19 benachbarte Buchten 29 im definierten Abstand gehalten werden.

Die im Ausführungsbeispiel der Fig. 5 gezeigten Platten 30 sind derart schräg gestellt, daß alle von den Tragbalken 21 herunterhängenden Längsabschnitte 24 der Streifen 17 etwa parallel zueinander verlaufen. Durch eine Veränderung der Schrägstellung der Platten 30 können benachbarte Längsabschnitte 24 der Streifen 17 einen konvergierenden oder divergierenden (V-artigen) Verlauf erhalten, wodurch die Strömungskanäle zwischen benachbarten Längsabschnitten 24 der Streifen 17 in beliebiger Weise verändert werden können.

Beim Ausführungsbeispiel der Fig. 4 sind die unteren Enden der Buchten 29 in den Bereichen ihrer unteren Verbindungsabschnitte 28 mit jeweils zwei parallelen, abgewinkelten Blechen 31 versehen. Die beiden Bleche 31 am unteren Ende jeder Bucht 29 bilden zusammen eine Art Hohlbalken, der durch- und umströmt werden kann. Die Bleche 31 weisen einen solchen Abstand zueinander auf, daß die benachbarten Längsabschnitte 24 der Streifen 17 parallel zueinander verlaufen. Die Enden der in Querrichtung durch das Festbett 11 verlaufenden Bleche 31 sind durch gegenüberliegende Längsträger 32 miteinander verbunden, die den äußeren Querrändern des Festbetts 11 zugeordnet sind. Die in Längsrichtung 19 verlaufenden Längsträger 32 und die dazwischen befestigten Bleche 31 bilden dadurch eine rostartige Halteeinrichtung 33 für die unteren Endbereiche aller Buchten 29 der Streifen 17. Es werden so durch die Halteeinrichtung 33 und durch die Trageinrichtung 12 die Streifen 17, insbesondere ihre Buchten 29 und die von den Tragbalken 21 herunterhängenden Längsabschnitte 24 in einer festgelegten Relativlage zueinander gehalten.

Die Halteeinrichtung 33 hängt am unteren Ende des Festbetts 11. Die Streifen 17 des Festbetts 11 tragen dadurch das Gewicht der Halteeinrichtung 33, wodurch sie gestreckt und insbesondere gegen Aufschwimmen in der zu behandelnden Flüssigkeit im Becken 10 gesichert werden. Zu diesem Zweck ist die Halteeinrichtung 33 frei hängend im Becken 10 angeordnet, wird also nicht von den Wandung 22 des Beckens 10 getragen. Es ist aber denkbar, die Halteeinrichtung 33 so zu bemessen oder ihr geeignete Anschläge an den Wandungen 22 des Beckens 10 zuzuordnen, daß sie in horizontaler Richtung nicht oder nur in unbedingt notwendigem Maße bewegbar ist. Dadurch wird sichergestellt, daß die Streifen 17 ihre Position zur mit den Wandungen 22 des Beckens 10 verbundenen Trageinrichtung 12 beibehalten, also ihren gezeigten vertikalen Verlauf nicht oder nicht nennenswert ändern können.

Alternativ ist es auch denkbar, zumindest die Halteeinrichtung 33, vorzugsweise auch die Trageinrichtung 12, gezielt bewegbar auszubilden oder gezielt zu bewegen. Beispielsweise könnte die Halteeinrichtung 33 mit geeigneten Bewegungseinrichtungen versehen sein, die die Halteeinrichtung 33 in Längsrichtung 19 und/oder Querrichtung 18 des Beckens 10 bewegen. Dazu kann die Halteeinrichtung 33 Unwuchterzeuger aufweisen, die die Halteeinrichtungen 33 in kontrollierte Schwingungen versetzen, wodurch die Streifen 17 schüttelnd hin- und herbewegbar sind, um beispielsweise abgestorbene Biomasse von den Streifen 17 zu entfernen. In analoger Weise kann gegebenenfalls zusätzlich oder alternativ auch die Trageinrichtung 12 bewegt werden.

Die Halteeinrichtung 33, und zwar insbesondere ihre Bleche 31 und/oder die Längsträger 32 können abweichend vom gezeigten Ausführungsbeispiel (Fig. 4) mit Öffnungen, Durchbrüchen oder eventuell einer regelmäßig Perforation in ihrer Fläche versehen sein. Dadurch wird die Halteeinrichtung 33, insbesondere die Bleche 31 und/oder die Längsträger 32, flüssigkeitsdurchlässig, wodurch das Entlangströmen der zu behandelnden Flüssigkeit an den Streifen 17 nicht oder nicht nennenswert beeinträchtigt wird. Ebenso können die üblicherweise aus Holz (Bongossi) gebildeten Tragbalken 21 profiliert und/oder mit Durchbrüchen versehen sein. Denkbar ist es auch, die Trageinrichtung 12 wie die Halteeinrichtung 33 auszubilden. Insbesondere sind dann die aus Holz (Bongossi) gebildeten massiven Tragbalken 21 ersetzt durch mit Abstand voneinander angeordneten Blechen 31, also als Hohlträger ausgebildet.

Die Streifen 17 sind im gezeigten Ausführungsbeispiel aus endlosen, schmalen Bahnen einer Kunststoffolie gebildet. Es ist aber auch denkbar, die Oberfläche der Streifen 17 ganz oder auch nur teilweise zu profilieren, beispielsweise gegenüberliegende Ränder zu kräuseln. Die Streifen 17 können auch mit einem oder gegebenenfalls auch mehreren zugaufnehmenden Strängen versehen sein. Der jeweilige Strang ist dann einstückig mit den Streifen 17 verbunden. Der oder jeder Strang kann wie die Streifen 17 aus einem Kunststoff gebildet sein. Vorzugsweise ist jeder Strang aus einem hochzugfesten Material, beispielsweise Kohlefaser, Glasfaser oder dergleichen gebildet. Schließlich ist es auch denkbar, an der Stelle der Streifen 17 nur Stränge zur Bildung des Festbetts 11 vorzusehen, wobei die Stränge über beliebige Querschnitte verfügen können. Ebenso kann das Festbett 11 auch aus einem Gemisch aus Strängen und Streifen 17 gebildet sein.

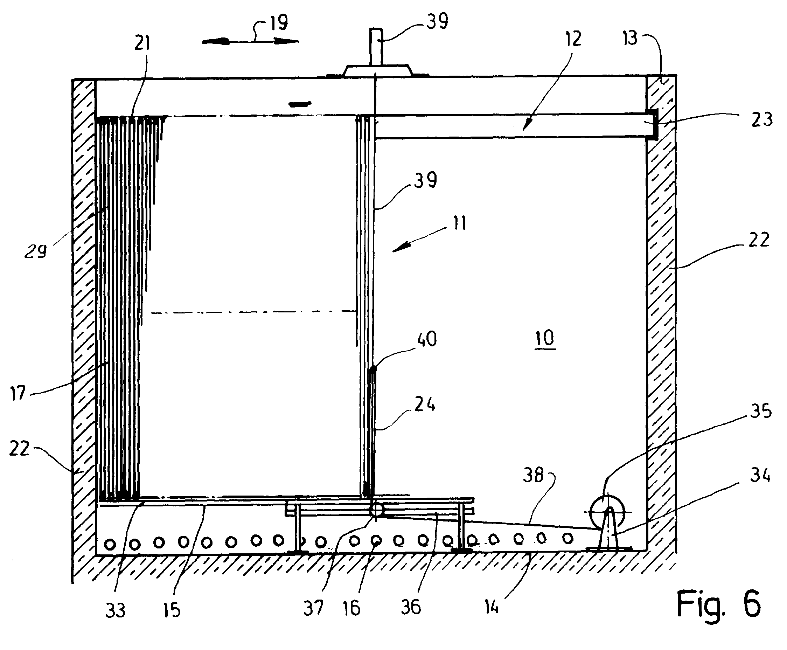

Ein Verfahren zur Herstellung des Festbetts 11 ist schematisch in der Fig. 6 dargestellt. Demnach ist im noch leeren Becken 10 eine Abrolleinrichtung 34 mit einer Vorratsrolle 35 angeordnet. Auf der Vorratsrolle 35 ist ein entsprechend großer Vorrat der bahnförmigen Folie, nämlich Folienbahn 38, zur Bildung der Streifen 17 aufgewickelt. Die Abrolleinrichtung 34 ist auf dem Boden 14 des Beckens 10 angeordnet. Des weiteren ist die nur teilweise dargestellte Halteeinrichtung 33 im entsprechenden Abstand vom Boden 14 des Beckens 10 gehalten durch eine tischartige Abstützeinrichtung 36. Diese trägt auch eine Umlenkrolle 37 für die von der Vorratsrolle 35 abzuziehende endlose Folienbahn 38. Des weiteren ist eine Hubeinrichtung 39 vorgesehen, die oberhalb der Trageinrichtung 12 angeordnet ist, indem sie sich beispielsweise durch entsprechende Halterungen am oberen Rand des Beckens 10 abstützt.

Zur Herstellung des Festbetts 11 nach dem Ausführungsbeispiel der Fig. 4 wird zunächst am äußersten Blech 31 der Halteeinrichtung 33 ein Ende der Folienbahn 38 dauerhaft befestigt. Nunmehr wird unter der Folienbahn 38 eine mit der Hubeinrichtung 39 verbundene Umlenkrolle 40 zur Anlage gebracht. Durch Hochziehen der Umlenkrolle 40 von der Hubeinrichtung 39 wird zwischen zwei benachbarten Platten zur Bildung nebeneinanderliegender Hohlträger der Halteeinrichtung 33 eine U-förmige Ausbuchtung der Folienbahn 38 gebildet. Ist die Folienbahn 38 von der Hubeinrichtung 39 über die Trageinrichtung 12 hochgezogen, wird zwischen den dadurch gebildeten parallelen, vertikalen Längsabschnitte 24 des jeweiligen Streifens 17 ein Tragbalken 21 hindurchgeschoben und die Umlenkrolle 40 der Hubeinrichtung 39 entfernt. Es fällt dann ein oberer Verbindungsabschnitt 25 zwischen den parallelen Längsabschnitten 24 des Streifens 17 auf den Auflagerbalken 23 zurück. Es wird nun die Hubeinrichtung 39 versetzt und die Umlenkrolle 40 abgesenkt, und zwar zwischen die nachfolgenden beiden Hohlbalken aus jeweils zwei Blechen 31 hindurch. Unterhalb der Halteeinrichtung 33 wird dann die Umlenkrolle 40 wieder unter der Folienbahn 38 positioniert und erneut hochgezogen. Dieser nähmaschinenartig ablaufende Vorgang wiederholt sich, bis alle Buchten 29 des Streifens 17 gebildet sind. Danach wird der in Querrichtung 18 nächstfolgende und in Längsrichtung 19 des Festbetts 11 durchgehende Streifen 17 in gleicher Weise hergestellt.

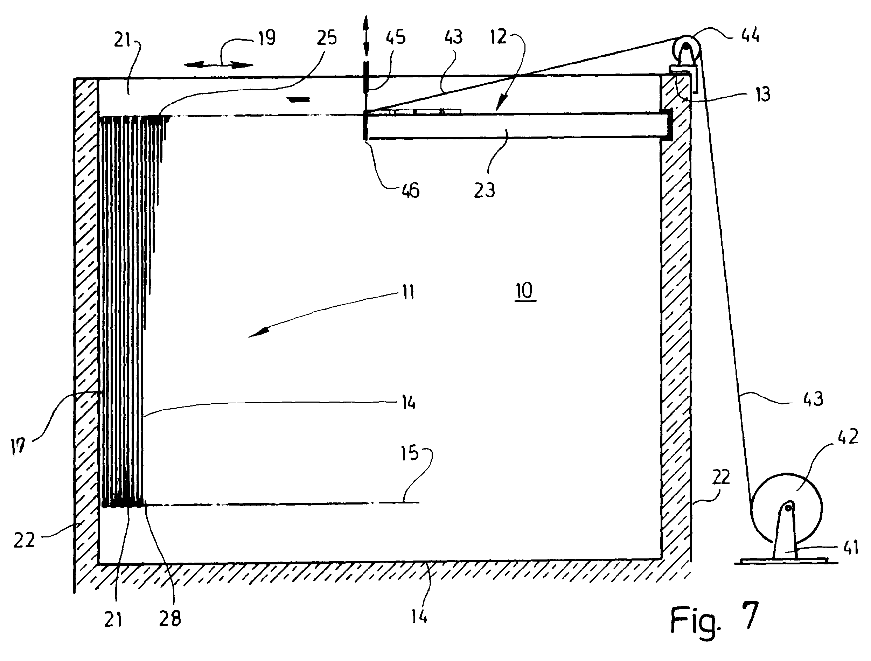

Die Fig. 7 veranschaulicht schematisch ein alternatives Verfahren zur Herstellung des Festbetts 11. Hier werden die Streifen 17 von der Oberseite der Trageinrichtung 12 aus zwischen aufeinanderfolgende Tragbalken 21 eingefädelt. Dazu befindet sich eine Abrolleinrichtung 41 mit einer Vorratsrolle 42 der Folienbahn 43 außerhalb des Beckens 10. Die Folienbahn 43 wird umgelenkt an einer am oberen Rand 13 des Beckens 10 befestigten Umlenkrolle 44. Von dieser wird die Folienbahn 43 zu einer Einschubeinrichtung 45 geleitet. Die Einschubeinrichtung 45 verfügt am freien unteren Ende über eine Umlenkrolle 46, die von der Einschubeinrichtung 45 in senkrechter Richtung auf- und abbewegbar ist. Wird die Umlenkrolle 46 von der Einschubeinrichtung 45 in senkrechter Richtung zwischen zwei benachbarten Tragbalken 21 hindurch abwärtsbewegt, wird eine Bucht 29 des Streifens 17 durch entsprechendes Abrollen der Folienbahn 43 von der Vorratsrolle 42 gebildet. Die jeweilige Bucht 29 wird von der Umlenkrolle 46 der Einschubeinrichtung 45 so weit abgesenkt, bis die Umlenkrolle 44 die Unterseite 15 des Festbetts 11 erreicht hat. Gegebenenfalls kann der Abstand der Unterseite 15 des Festbetts 11 vom Boden 14 des Beckens 10 vorgegeben werden durch einen mit entsprechendem Abstand vom Boden 14 angeordneten (nicht gezeigten) Anschlag. In der vorstehend beschriebenen Weise wird jede Bucht 29 eines Streifens 17 des Festbetts gebildet.

Bei der beschriebenen Art der Herstellung des Festbetts 11 (Fig. 7) kann die Trageinrichtung 12 bereits fest im Becken 10 angeordnet sein, und zwar mit entsprechendem Abstand der Tragbalken 21, die dazu bereits an den Auflagerbalken 23 befestigt sein können.

Zur Bildung des Festbetts 11 nach dem Ausführungsbeispiel der Fig. 5 werden die unteren Enden der Buchten 29 nach der Herstellung derselben mit jeweils einer Platte 30 beschwert, die dazu von der Seite in den entsprechenden unteren Verbindungsabschnitt 28 der Bucht 29 eines Streifens 17 oder aller in Querrichtung 18 aufeinanderfolgender Streifen 17 eingeschoben wird.

Zur Bildung einzelner U-förmiger Streifen 17 auf jedem Tragbalken 21 (Fig. 3) wird die Folienbahn 43 am unteren Ende der jeweiligen Bucht 29 durchschnitten, so daß getrennte Streifen 17 mit freien Enden 20 entstehen. Anschließend werden die freien Enden 20 mit einzelnen Klammern 26 oder in Querrichtung 18 durchgehenden Klammern versehen.

Nach dem vorstehend beschriebenen Herstellungsverfahren können auch andere Füllkörper gebildet werden, zum Beispiel Füllkörper für Tropfkörper oder Füllkörper zur biologischen Abluftreinigung, die nicht ständig im zu behandelnden Fluid eingetaucht sind, vielmehr von diesen nur umströmt werden.

### Bezugszeichenliste:

- 10: Becken
- 11: Festbett
- 12: Trageinrichtung
- 13: oberer Rand
- 14: Boden
- 15: Unterseite
- 16: Belüftungseinrichtung
- 17: Streifen
- 18: Querrichtung
- 19: Längsrichtung
- 20: freies Ende
- 21: Tragbalken
- 22: Wandung
- 23: Auflagerbalken
- 24: Längsabschnitt
- 25: oberer Verbindungsabschnitt
- 26: Klammer
- 27: Zahn
- 28: unterer Verbindungsabschnitt
- 29: Bucht
- 30: Platte
- 31: Blech
- 32: Längsträger
- 33: Halteeinrichtung
- 34: Abrolleinrichtung
- 35: Vorratsrolle
- 36: Abstützeinrichtung
- 37: Umlenkrolle
- 38: Folienbahn
- 39: Hubeinrichtung
- 40: Umlenkrolle
- 41: Abrolleinrichtung
- 42: Vorratsrolle
- 43: Folienbahn
- 44: Umlenkrolle
- 45: Einschubeinrichtung
- 46: Umlenkrolle

## Patentansprüche

1. Vorrichtung zur Behandlung von Fluiden, insbesondere zur biologischen Behandlung von Flüssigkeiten, mit vorzugsweise einem Becken (10) zur Aufnahme der zu behandelnden Flüssigkeit und mit mindestens einem Festbett (11), das in der zu behandelnden Flüssigkeit mindestens größtenteils eingetaucht ist, **dadurch gekennzeichnet**, daß das Festbett (11) aus Streifen (17) und/oder Strängen gebildet ist, die von einer Trageinrichtung (12) herunterhängen

2. Vorrichtung nach Anspruch 1, **dadurch gekennzeichnet**, daß die Streifen (17) und/oder Stränge gestreckt, insbesondere gegen Aufschwimmen gesichert, sind, vorzugsweise indem freie Enden (20) und/oder ein unterer Verbindungsabschnitt (28) der Streifen (17) gewichtsbelastet sind.

3. Vorrichtung nach einem der vorhergehenden Ansprüche, **dadurch gekennzeichnet**, daß freie Enden (20) oder untere Verbindungsabschnitte (28) der Streifen (17) und/oder Stränge mit in der zu behandelnden Flüssigkeit nicht aufschwimmenden Gegenständen, vorzugsweise eine Halteeinrichtung (33), versehen sind.

4. Vorrichtung nach einem der vorhergehenden Ansprüche, **dadurch gekennzeichnet**, daß die von der Trageinrichtung (12) herunterhängenden Streifen (17) und/oder Stränge, insbesondere die Streifen (17) und/oder Stränge zwischen benachbarten Tragbalken (21) der Trageinrichtung (12), an ihren unteren Endbereichen (untere Verbindungsabschnitte 28) endlos geführt sind.

5. Vorrichtung nach einem der vorhergehenden Ansprüche, **dadurch gekennzeichnet**, daß die Streifen (17) und/oder Stränge auf der Trageinrichtung (12), vorzugsweise länglichen Tragbalken (21), nebeneinanderliegen, insbesondere derart, daß zwischen benachbarten Streifen (17) und/oder Strängen kein oder nur ein minimaler Zwischenraum und/oder keine oder nur eine minimale Überlappung vorhanden ist.

6. Vorrichtung nach einem der vorhergehenden Ansprüche, **dadurch gekennzeichnet**, daß unteren freien Enden (20) und/oder unteren Verbindungsabschnitten (28) der Streifen (17) und/oder Stränge mindestens ein die Streifen (17) und/oder Stränge gewichtsbelastender bzw. streckender Gegenstand, insbesondere eine an den Streifen (17) und/oder Strängen hängende Halteeinrichtung (33), zugeordnet ist.

7. Vorrichtung nach einem der vorhergehenden Ansprüche, **dadurch gekennzeichnet**, daß die an den Streifen (17) und/oder Strängen hängende Halteeinrichtung (33) keine Verbindung zum Becken (10) aufweist, insbesondere im Becken (10) frei beweglich oder gezielt beweglich ist.

8. Vorrichtung nach einem der vorhergehenden Ansprüche, **dadurch gekennzeichnet**, daß die Trageinrichtung (12) lösbar im Becken (10) gelagert ist, sich vorzugsweise auf Auflagern im Becken (10) abstützt.

9. Vorrichtung nach einem der vorhergehenden Ansprüche, **dadurch gekennzeichnet**, daß die Streifen (17) aus einer schmalen Folienbahn (38, 43) aus Kunststoff, insbesondere thermoplastischem Kunststoff, gebildet sind, wobei vorzugsweise die Folienbahn (38, 43) zur Bildung der Streifen (17) mindestens teilweise strukturiert ist.

10. Vorrichtung nach einem der vorhergehenden Ansprüche, **dadurch gekennzeichnet**, daß die Folienbahn (38, 43) zur Bildung der Streifen (17) Durchbrechungen, insbesondere Löcher oder dergleichen, aufweist, vorzugsweise die Streifen (17) aus einer (schmalen) Netzbahn gebildet sind.

11. Vorrichtung nach einem der vorhergehenden Ansprüche, **dadurch gekennzeichnet**, daß die Streifen (27) mit jeweils mindestens einem zugaufnehmenden Strang aus einem vorzugsweise hochzugfesten Material versehen sind.

12. Verfahren zur Herstellung eines Füllmaterials, insbesondere eines Festbetts (11) zur vorzugsweise biologischen Behandlung von Fluiden, wobei das einer Trageinrichtung (12) zugeordnete Füllmaterial in einem das zu behandelnde Fluid aufnehmenden Becken (10) angeordnet wird, **dadurch gekennzeichnet**, daß das Füllmaterial aus Streifen (17) gebildet wird, wobei die Streifen (17) von einer endlosen Folienbahn (38, 43) abgezogen und in Buchten (19) zwischen jeweils zwei benachbarten Tragbalken (21) der Trageinrichtung (12) eingebracht wird.

13. Verfahren Anspruch 13, **dadurch gekennzeichnet**, daß jeder Streifen (17) durch aufeinanderfolgendes Einbringen von Buchten (29) der endlosen Folienbahnen (38, 43) zwischen jeweils zwei aufeinanderfolgenden (benachbarten) Tragbalken (21) der Trageinrichtung (12) gebildet wird.

14. Verwendung eines Füllmaterials mit von Folienbahnen (38, 43) aus vorzugsweise im wesentlichen Kunststoff gebildeten Streifen (17) als getauchtes Festbett (11) in Becken (10) zur Behandlung von Fluiden, insbesondere zur biologischen Behandlung von Abwasser.
